(19) Europäisches Patentamt / European Patent Office / Office européen des brevets

(11) **EP 2 520 041 B1**

(12) **FASCICULE DE BREVET EUROPEEN**

(45) Date de publication et mention
de la délivrance du brevet:
**30.03.2016 Bulletin 2016/13**

(21) Numéro de dépôt: **10809321.2**

(22) Date de dépôt: **28.12.2010**

(51) Int Cl.:
*H04L 9/00* (2006.01)   *H04L 9/06* (2006.01)
*H04L 9/08* (2006.01)   *H04L 9/18* (2006.01)
*H04L 29/06* (2006.01)

(86) Numéro de dépôt international:
**PCT/FR2010/052931**

(87) Numéro de publication internationale:
**WO 2011/080487 (07.07.2011 Gazette 2011/27)**

(54) **PROCEDE DE GENERATION DE TABLE DE CORRESPONDANCE POUR UNE BOITE BLANCHE CRYPTOGRAPHIQUE**

VERFAHREN ZUR ERZEUGUNG EINER VERWEISTABELLE FÜR EINE KRYPTOGRAFISCHE WHITE-BOX

METHOD FOR GENERATING A LOOK-UP TABLE FOR A CRYPTOGRAPHIC WHITE BOX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2009 FR 0959679**

(43) Date de publication de la demande:
**07.11.2012 Bulletin 2012/45**

(73) Titulaire: **Koninklijke Philips N.V.**
**5656 AE Eindhoven (NL)**

(72) Inventeurs:
• **BILLET, Olivier**
**F-06140 Tourrettes Sur Loup (FR)**

• **MACARIO-RAT, Gilles**
**F-92170 Vanves (FR)**

(74) Mandataire: **de Haan, Poul Erik et al**
**Philips International B.V.**
**Philips Intellectual Property & Standards**
**High Tech Campus 5**
**5656 AE Eindhoven (NL)**

(56) Documents cités:
EP-A1- 1 833 190        EP-A2- 1 615 098
WO-A1-2009/074726   WO-A2-03/017067
US-A1- 2005 259 814   US-A1- 2007 140 478

EP 2 520 041 B1

# Description

La présente invention concerne le domaine de la cryptographie, en particulier appliquée à la distribution de contenus multimédias.

Avec l'avènement du numérique, et grâce aux réseaux de communication, la distribution de contenus audiovisuels revêt de multiples formes et de nouveaux contextes de distribution qui n'existaient pas jusqu'alors voient le jour.

La distribution massive de tels contenus pose le problème de la protection de ces contenus : si ceux-ci sont maintenant faciles à distribuer, il est également relativement aisé de les copier, rapidement et de façon massive.

Pour protéger ces contenus, l'utilisation de techniques cryptographiques s'est répandue avec un certain succès. En effet, la cryptographie trouve application pour sécuriser des transactions entre deux ou plusieurs entités, par application d'une tâche cryptographique. Parmi ces tâches cryptographiques, on trouve le chiffrement de messages, la signature électronique ou encore l'authentification de messages. Un procédé de chiffrement consiste essentiellement à chiffrer un message de façon à ce que seul un destinataire légitime puisse le déchiffrer, au moyen d'un logiciel et d'un matériel cryptographique qu'il aura acquis de façon légale.

Le problème d'une telle technique de chiffrement est que l'utilisateur légitime possédant le logiciel de déchiffrement peut tenter de comprendre les rouages de ce logiciel, en effectuant des opérations de « reverse engineering ».

Des telles opérations de «reverse engineering» ont pour objectif d'identifier les algorithmes utilisés dans le logiciel, voire également de récupérer des clés ou des secrets cryptographiques distribués à l'utilisateur légitime et dont ce logiciel de déchiffrement se sert.

L'identification des algorithmes ainsi que la distribution massive des clés ou des secrets cryptographiques récupérés anéantissent ainsi les efforts de protection fournis pour obtenir le procédé cryptographique de chiffrement.

Afin de lutter contre cette menace de «reverse engineering» affectant les algorithmes cryptographiques embarqués dans des logiciels consommant des contenus multimédias, un nouveau modèle d'attaque cryptographique, appelé attaque en boîte blanche, ainsi qu'une stratégie de protection de ce modèle ont été proposés dans l'article «A White-Box DES Implementation for DRM Applications » de Chow et al. Les algorithmes cryptographiques décrits dans cet article sont constitués d'applications affines et d'applications non-linéaires avec un très petit nombre de variables sous forme de tables de mémoire. Ainsi, il devient beaucoup plus difficile d'identifier l'algorithme cryptographique utilisé, et il est possible de cacher certaines étapes et/ou valeurs lors de l'exécution de l'algorithme de déchiffrement.

En particulier, les variables transitant entre les différentes tables et observables par l'utilisateur, lesquelles correspondent aux variables de transition entre les différentes opérations élémentaires de l'algorithme cryptographique de déchiffrement, sont codées par une fonction secrète de codage. Ainsi, comme les valeurs observées ne sont pas directement les valeurs utilisées par les opérations élémentaires cryptographiques, mais leur version codée, le «reverse engineering » est rendu plus difficile.

Cette stratégie de protection a cependant été cryptanalysée avec succès, comme cela est exposé dans l'article « Cryptanalysis of a white box AES implementation » de Billet et al. Il a été ainsi démontré que cette stratégie ne remplissait pas les objectifs de sécurité visés, notamment du fait que la protection des variables de transition observables par un attaquant n'était pas suffisante.

Le document de brevet US2005/259814 A1 (Gebotys Catherine H [CA]) publié le 24 novembre 2005 expose un dispositif employant une table de substitution masquée pour contrer les attaques sur les canaux cachés.

Le document de brevet EP 1 615 098 A2 (Giesecke & Devrient GMBH [DE]) publié le 11 janvier 2006 expose un chaînage de tables de masquage dans un circuit d'élaboration de données sécurisé.

Le document de brevet EP 1 833 190 A1 (Research in Motion LTD [CA]) publié le 12 septembre 2007 expose la subdivision d'une table de substitution masquée en un ensemble de sous-tables.

Le document de brevet US2007/14 478 A1 (Komano Yuichi [JP et al.]) publié le 21 juin 2007 expose la sécurisation d'une table de substitution sur la base d'un masque sélectionné aléatoirement.

Un objet de la présente invention est donc d'améliorer la situation.

La présente invention propose à cet effet un procédé de génération d'une table de correspondance utilisable dans un procédé de traitement cryptographique comprenant la mémorisation d'une pluralité de données d'entrée et de données de sortie, chacune desdites données d'entrée étant associée à au moins une desdites données de sortie dans la table, le procédé comportant, pour chacune desdites données d'entrée, l'obtention d'au moins une desdites données de sortie par application d'une fonction de codage à une première donnée subsidiaire et à une donnée intermédiaire chiffrée dépendant de la donnée d'entrée.

Ainsi, le procédé de l'invention propose une solution cryptographique plus résistante au « reverse engineering » que la stratégie de boîte blanche exposée ci-avant et permet de mieux protéger de tels algorithmes cryptographiques en boîte blanche.

La donnée intermédiaire chiffrée est obtenue avantageusement par application d'une fonction cryptographique à la donnée d'entrée, ce qui permet de protéger cette fonction cryptographique d'une déduction par « reverse engineering ».

Dans un mode préféré de réalisation, pour chaque donnée d'entrée, une pluralité de premières données subsidiaires distinctes sont générées et une pluralité de données de sorties sont obtenues par application, pour chacune desdites premières données subsidiaire générées, d'une fonction de codage à ladite première donnée subsidiaire et à la donnée intermédiaire chiffrée. Ceci permet le renforcement de la protection de la fonction cryptographique en évitant d'avoir une relation univoque dans la table de correspondance. Par l'usage de ces données intermédiaires, il est possible de marquer, au sens watermarking du terme, le procédé de déchiffrement soit pour l'émetteur, soit pour le destinataire, soit pour le contenu. Ainsi, si l'on choisit ces données subsidiaires d'une façon connue du dispositif émetteur qui met en oeuvre le logiciel de chiffrement, il est alors possible de marquer de manière personnalisée un contenu en fonction d'une identité qui peut être celle associée au dispositif émetteur, par exemple l'identité de la personne détenteur des droits associés au contenu, ou l'identité associée à un dispositif récepteur, par exemple l'identité d'une personne qui a acquis des droits sur un contenu qui lui est transmis chiffré. D'autre part, il est possible de glisser parmi ces données subsidiaires des données leurres pouvant servir ensuite à détecter un usage anormal du dispositif de déchiffrement. Par exemple, de telles données leurres peuvent être utilisées pour détecter qu'une personne malintentionnée tente de faire un reverse engineering du dispositif de déchiffrement et pour que le dispositif se mette alors en mode défensif, rendant impossible l'aboutissement de cette action de reverse engineering. Dans un autre exemple, ces données leurres peuvent être utilisées pour faire adopter au dispositif récepteur de déchiffrement un comportement piloté à distance depuis le dispositif émetteur. Le dispositif récepteur peut ainsi être piloté afin de révéler son identité. Cela offre une possibilité de traçage de traîtres.

Avantageusement, pour chaque donnée d'entrée, une pluralité de deuxièmes données subsidiaires distinctes sont générées et une pluralité de données d'entrées codées sont obtenues par application, pour chacune desdites deuxièmes données subsidiaire générées, d'une fonction de codage à ladite deuxième donnée subsidiaire et à la donnée d'entrée. Ceci permet également le renforcement de la protection de la fonction cryptographique en évitant de donner accès directement, par la table de correspondance, aux données d'entrée.

De préférence, les premières données subsidiaires et/ou les deuxièmes données subsidiaires sont générées aléatoirement, ce qui renforce la protection de la fonction cryptographique.

Dans un autre mode de réalisation avantageux, la donnée d'entrée est obtenue par application d'une fonction préliminaire à une donnée d'entrée précodée, ce qui renforce la protection de la fonction cryptographique employée par rapport à une technique de « reverse engineering ».

Préférentiellement, lorsque la donnée d'entrée est obtenue par application préalable d'une fonction préalable de codage à au moins une donnée d'entrée initiale, la fonction préliminaire appliquée à la donnée d'entrée est une fonction de décodage correspondant à ladite fonction préalable de codage. Il est alors possible de protéger une succession de fonctions partielles de chiffrement dans une boîte blanche cryptographique, en ne permettant l'observation que de variables de transition codées.

La présente invention vise aussi un procédé de génération d'une pluralité de tables de correspondance comprenant la génération initiale d'une première table de correspondance au moyen du procédé de génération ci-avant dans lequel la fonction cryptographique est appliquée directement à au moins une donnée d'entrée initiale suivie de la génération d'une succession de tables de correspondance au moyen du procédé de génération ci-avant.

Dans un mode de réalisation préféré du procédé de génération d'une pluralité de tables ci-avant, celui-ci comprend une étape finale de génération d'une dernière table de correspondance dans laquelle sont mémorisées une pluralité de données d'entrée associées chacune à une pluralité de données de sortie, chacune desdites données de sortie étant obtenue par application d'une fonction cryptographique à une donnée intermédiaire obtenue par application à la donnée d'entrée associée d'une fonction de décodage correspondant à la fonction de codage employée lors de la génération de la dernière table générée au cours du procédé ci-avant..

L'invention vise par ailleurs un procédé de chiffrement d'une donnée d'entrée en une donnée de sortie, cette donnée de sortie étant obtenue par application d'une fonction de codage à une première donnée subsidiaire et une donnée intermédiaire chiffrée obtenue par application d'une fonction cryptographique à la donnée d'entrée.

Avantageusement, le procédé de chiffrement comporte une étape préalable de mémorisation d'une pluralité de données subsidiaires utilisées pour générer au moins une table de correspondance, la première donnée subsidiaire étant sélectionnée aléatoirement parmi ladite pluralité de données subsidiaires, ce qui permet le déchiffrement de la donnée chiffrée au moyen de la table de correspondance générée. Les données ainsi chiffrées ne peuvent être efficacement déchiffrées que sur un dispositif de déchiffrement comportant une telle table de correspondance.

La présente invention vise aussi une unité de mémorisation comprenant au moins un moyen de mémorisation dans lequel sont mémorisées une première pluralité de données d'entrée et une deuxième pluralité de données de sortie. Pour chaque moyen de mémorisation, chacune données d'entrée est associée à au moins une desdites données de sortie selon une table de correspondance générée au moyen du procédé de génération ci-avant.

La présente invention vise également un dispositif d'implémentation physique d'une table de correspondance cryptographique comprenant une unité de traitement de données connectée à une unité de programmation apte à recevoir au moins un moyen de mémorisation, l'unité de traitement étant arrangée pour générer, à partir d'une pluralité de données d'entrée, au moins une table de correspondance cryptographique au moyen du procédé de génération ci-avant et l'unité de programmation est arrangée pour mémoriser ladite table de correspondance dans le moyen de mémorisation.

La présente invention vise par ailleurs un dispositif de déchiffrement d'une donnée chiffrée comprenant l'unité de mémorisation ci-avant et un module de traitement connecté à chacun des moyens de mémorisation de l'unité de mémorisation, ledit module de traitement étant agencé pour lire une première donnée d'entrée associée à la donnée à déchiffrer dans le moyen de mémorisation dans lequel est mémorisée la dernière table générée et pour lire, successivement dans l'ordre inverse de génération des tables successivement mémorisées dans les moyens de mémorisation, une donnée d'entrée associée à la donnée de sortie correspondant à la donnée d'entrée lue dans le moyen de mémorisation lu précédemment.

L'utilisateur d'un tel dispositif de déchiffrement ne peut observer que des variables de transition codées sans pouvoir en déduire étapes de déchiffrement partiel implémentées successivement dans les moyens de mémorisation.

La présente invention vise enfin un produit de programme d'ordinateur enregistré sur un support de mémorisation pour exécution par une unité de traitement, permettant mise en oeuvre du procédé de génération ci-avant afin d'obtenir au moins une table de correspondance cryptographique.

D'autres détails et avantages de l'invention seront mieux compris à partir d'exemples de mise en oeuvre dont la description suit en référence aux dessins annexés dans lesquels :

- la figure 1A illustre un procédé de génération d'une table de correspondance selon la présente invention ;
- la figure 1B illustre la table de correspondance générée par le procédé de génération selon la présente invention ;
- la figure 1C illustre les procédés de chiffrement et de déchiffrement utilisant la table de correspondance générée par le procédé de génération de la présente invention ;
- la figure 2A illustre un premier mode de réalisation du procédé de génération de la présente invention ;
- la figure 2B illustre la table de correspondance générée par le premier mode de réalisation du procédé de génération de la présente invention ;
- la figure 3 illustre un deuxième mode de réalisation du procédé de génération de la présente invention ;
- les figures 4A-4C illustrent un procédé de génération d'une pluralité de tables de correspondance selon la présente invention ;
- la figure 5 illustre un dispositif d'implémentation physique d'une table de correspondance cryptographique généré au moyen du procédé selon la présente invention ; et
- la figure 6 illustre un dispositif de déchiffrement cryptographique utilisant au moins une table de correspondance générée au moyen du procédé selon la présente invention.

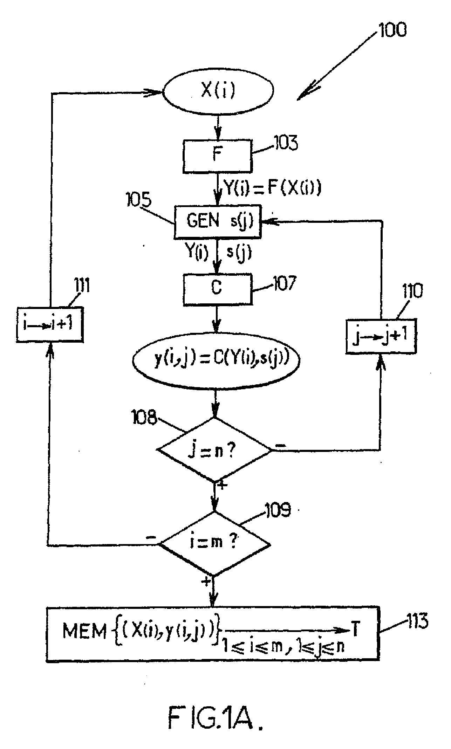

On se réfère maintenant à la figure 1A qui illustre un procédé 100 de génération d'une table de correspondance selon la présente invention.

Ce procédé consiste à mémoriser dans une table de correspondance T, pour chaque donnée d'entrée X(i) prise dans un certain nombre m (où m est un entier supérieur à 1) de données d'entrée X(1),...,X(i),..., X(m), un nombre n de données de sortie y(i,j), n étant un entier supérieur ou égal à 1. La table de correspondance T ainsi générée contient alors n*m paires de données codées (X(i),y(ij)) et peut être stockée dans un moyen de mémorisation de type mémoire morte figée. Les données X(i) et y(i,j) peuvent se présenter, par exemple, sous forme binaire ou toute autre forme permettant une mémorisation simple dans un moyen de mémorisation classique.

La figure 1A montre le calcul permettant, pour une donnée X(i) d'entrée, d'obtenir les données de sortie y(i,j) correspondantes. Pour obtenir la table de correspondance complète, il suffit de reproduire ce calcul m fois, pour chacune des données d'entrée X(i) possibles, comme cela est indiqué par la boucle récursive formée par l'étape 109 de vérification de fin de boucle et l'étape d'incrémentation 111 de la variable i. Une fois le calcul des données de sortie y(i,j) correspondant à chaque donnée d'entrée X(i) effectué pour toutes les données d'entrée X(i), la table de correspondance T peut être mémorisée dans un moyen de mémorisation lors d'une étape de mémorisation 113.

En particulier, pour chacune des données X(i) d'entrée, au moins une donnée de sortie associée y(i,j) est obtenue par l'application, lors de l'étape 107 de codage, d'une fonction de codage C à deux données distinctes : la fonction de codage C est appliquée à une première donnée subsidiaire s(j), générée lors de l'étape de génération 105, et à une donnée intermédiaire chiffrée Y(i) dépendant de la donnée d'entrée X(i).

La présence d'une première donnée subsidiaire s(j) dans le codage de la donnée intermédiaire Y(i) permet d'empêcher un utilisateur de retrouver, par « reverse engineering », des variables utilisées lors d'étapes de chiffrement précédant le codage et donc d'en déduire directement le type de fonction de chiffrement utilisé.

La donnée intermédiaire chiffrée Y(i) est obtenue avantageusement par application, lors d'une étape de chiffrement 103, d'une fonction cryptographique F à la donnée d'entrée X(i). Une telle fonction cryptographique peut correspondre à tout type d'opération, comme par exemple une opération arithmétique telle qu'une addition, une multiplication, l'élévation à une puissance, ou bien une permutation arbitraire.

Grâce à l'application de la fonction de codage C à la donnée intermédiaire chiffrée Y(i) ainsi qu'à la donnée subsidiaire s(j), la fonction cryptographique F employée est « protégée » et ne peut pas être déduite par un utilisateur n'ayant accès qu'aux seules données d'entrée X(i) et de sortie y(i,j).

En effet, pour pouvoir déduire la fonction cryptographique F, l'utilisateur a besoin de connaître aussi bien la donnée sur laquelle est appliquée directement cette fonction F que la donnée résultant directement de l'application de cette fonction F.

Ainsi, même si l'utilisateur, connaissant la donnée d'entrée X(i), a ainsi accès à la donnée sur laquelle est appliquée directement la fonction cryptographique F, il n'a pas accès à la donnée intermédiaire chiffrée Y(i) résultant directement de l'application de cette fonction F, puisque celle-ci est masquée par la fonction de codage C.

Une telle première donnée subsidiaire s(j) peut être générée, lors d'une étape 105 de génération, par un processus aléatoire, ce qui renforce la résistance du procédé par rapport à un utilisateur malveillant. Il peut être avantageux, du point de vue de la facilité d'implémentation technique, d'utiliser un processus pseudo-aléatoire pour générer cette donnée subsidiaire s(j).

Dans un mode préféré de réalisation, les différentes données subsidiaires s(j) générées pour une même donnée d'entrée X(i) sont générées, lors de l'étape 105, de façon à être distincte les unes des autres, afin de renforcer la protection de la fonction de chiffrement F. En variante, cette première donnée subsidiaire peut être générée lors de l'étape 105 en fonction de la donnée d'entrée X(i), comme cela sera expliqué plus loin.

Ces opérations de génération d'une première donnée subsidiaire s(j) et de codage d'une donnée de sortie correspondante y(i,j) telle que y(i,j)=C(Y(i),s(j)) sont répétées de préférence n fois pour chaque donnée d'entrée X(i), de façon à obtenir n données de sortie y(i,j), avec j allant de 1 à n, pour chaque donnée d'entrée X(i). Ceci est symbolisé sur la figure 1A par la boucle récursive formée par l'étape 108 de vérification de fin de boucle et l'étape d'incrémentation 110 de la variable j.

Une fois les deux boucles récursives terminées, on dispose d'un ensemble de paires {(X(i),y(i,j))} $_{1\leq i\leq m, 1\leq j\leq n}$ qu'il est possible de mémoriser, lors de l'étape de mémorisation 113, sous forme d'une table de correspondance T dans un moyen de mémorisation adapté.

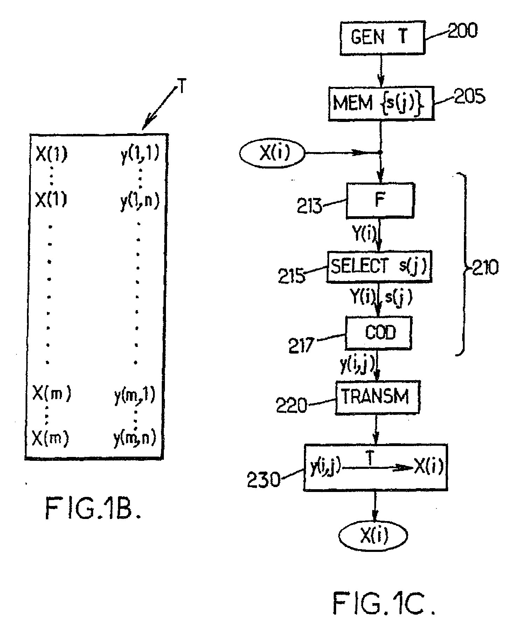

La table de correspondance générée par le procédé de génération ci-avant est illustrée sur la **figure 1B**.

Sur cette figure 1B, la table de correspondance T se présente sous la forme de 2 colonnes et n*m lignes, la première colonne comportant les données d'entrée X(i) et la deuxième colonne comportant les données de sortie codées y(i,j) associées à ces données d'entrée X(i). Ces données peuvent être classées par exemple par incrémentation de la première variable i, ce qui permet de grouper les paires de données (X(i),y(i,j)) de façon croissante en fonction de la donnée d'entrée X(i) utilisée pour générer les données de sortie y(i,j), comme cela est indiqué sur la figure 1B.

On voit bien, sur cette figure 1B, qu'à une même donnée d'entrée X(i) correspond un certain nombre de données de sortie y(i,j), générées en fonction de données subsidiaires s(j). L'utilisation d'une table de correspondance T, dans un dispositif d'utilisateur, permet ainsi de retrouver directement, à partir d'une donnée de sortie y(i,j) transmise par un serveur de distribution, une donnée d'entrée X(i) déchiffrée sans donner aucune information sur la fonction de chiffrement employée, ni laisser la possibilité à l'utilisateur d'en obtenir.

Une telle table de correspondance T constitue une boîte noire dans le sens où, pour une donnée de sortie y(i,j) spécifique fournie par l'utilisateur, cette table T ne retourne qu'une seule donnée d'entrée X(i) correspondante, et réciproquement, sans donner aucune information sur la façon dont a été calculée la donnée de sortie y(i,j).

Dans une variante, si on s'arrange pour que les valeurs de X(i) soient les valeurs comprises entre 1 et m, on peut omettre la première colonne, car implicitement, on peut déduire la valeur de X(i) du numéro de ligne.

La figure 1C illustre les procédés de chiffrement et de déchiffrement utilisant la table de correspondance générée par le premier mode de réalisation du procédé de génération de la présente invention.

Une donnée X(i) à transmettre, par exemple un bloc de données binaires d'un film à transmettre d'un serveur de distribution vers un ou plusieurs utilisateur(s) disposant d'un dispositif de déchiffrement muni d'une table de correspondance T générée grâce au procédé de génération ci-avant, est d'abord chiffrée par le procédé 210 de chiffrement, en une donnée de sortie y(i,j).

Pour ce faire, on applique d'abord la fonction de chiffrement F employée lors de la génération de la table de correspondance T à la donnée X(i), lors d'une première étape de chiffrement 213, afin d'obtenir une donnée d'entrée chiffrée Y(i).

On génère ensuite une donnée subsidiaire s(i) correspondant à l'une des données subsidiaires s(j) employées lors de la génération de la table de correspondance T, lors d'une étape de génération 215. Cette étape de génération 215 peut par exemple être implémentée par la sélection aléatoire d'une donnée subsidiaire parmi l'ensemble mémorisé, lors d'une étape de mémorisation 205, des données subsidiaires s(j) utilisées pendant la génération de la table de correspondance T lors d'une étape de génération 200 similaire à l'étape 100 ci-avant.

On applique enfin la fonction de codage C employée lors de la génération de la table de correspondance T à la donnée d'entrée chiffrée Y(i) et à la donnée subsidiaire s(j) générée, lors d'une étape de codage 217, afin d'obtenir une donnée de sortie y(i,j).

Grâce à l'emploi des fonctions de chiffrement F et de codage C employées lors de la génération de la table de correspondance T, et grâce à la génération d'une donnée subsidiaire s(j) utilisée lors de la génération cette même table de correspondance T, la donnée de sortie y(i,j) obtenue correspond à l'une des données de sortie mémorisées dans cette table T.

La donnée de sortie y(i,j) obtenue est alors transmise vers le(s) utilisateur(s) concernés lors d'une étape 220 de transmission, qui peut se faire par l'intermédiaire de moyens de transmission filaires ou sans fil habituels.

Une fois reçue par le dispositif d'un utilisateur, cette donnée de sortie y(i,j) est alors déchiffrée au cours d'une étape de déchiffrement 230. Cette étape de déchiffrement 230 consiste à utiliser la table de correspondance T générée selon le procédé ci-avant, avec les mêmes fonctions F et C que celles employées lors de la préparation de la donnée y(i,j), et à chercher dans cette table T la donnée d'entrée X(i) associée à la donnée de sortie y(i,j) reçue. Cette donnée d'entrée X(i) correspond alors à la donnée X(i) déchiffrée et la transmission chiffrée de la donnée X(i) est alors correctement effectuée.

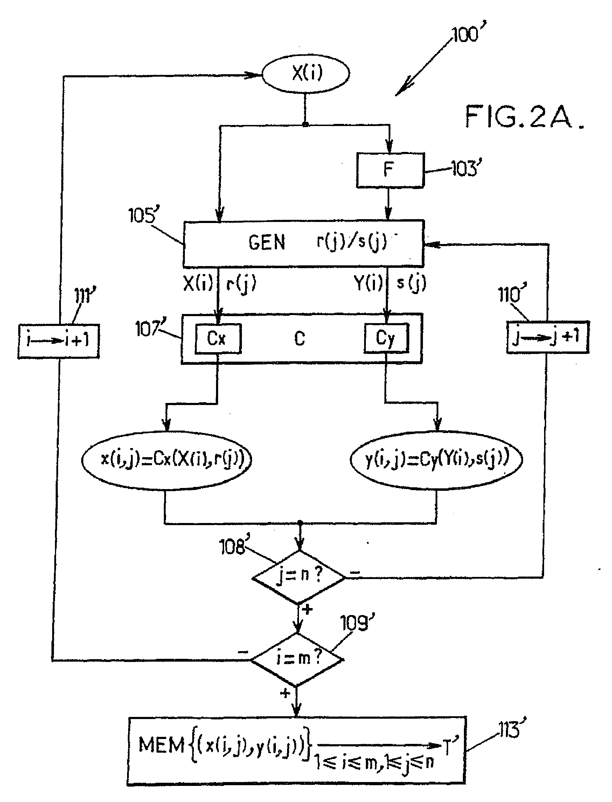

On se réfère maintenant à la **figure 2A**, laquelle illustre un premier mode de réalisation du procédé de génération de la présente invention.

Les étapes du procédé 100' illustré sur cette figure correspondent aux étapes du procédé 100 illustré sur la figure 1A, à ceci près que la fonction de codage Cy est employée pour coder la donnée d'entrée chiffrée Y(i) en fonction de chaque première donnée subsidiaire s(j), de sorte que y(ij)=Cy(Y(i),s(j)).

L'étape de génération 105' comporte en outre la génération, pour chaque valeur de la variable j incrémentée en fonction de la variable i, d'une deuxième donnée subsidiaire r(j). Il est alors possible d'obtenir une donnée d'entrée codée x(i,j) à partir de la donnée d'entrée X(i) et de cette deuxième donnée subsidiaire r(j).

Tout comme pour la première donnée subsidiaire s(j), cette deuxième donnée subsidiaire r(j) peut être générée par un processus aléatoire ou, plus avantageusement du point de vue de la facilité d'implémentation technique, par un processus pseudo-aléatoire. Dans un mode préféré de réalisation, les différentes deuxièmes données subsidiaires r(j) générées pour une même donnée d'entrée X(i) sont générées, lors de l'étape 105', de façon à être distinctes les unes des autres. Enfin, en variante, cette deuxième donnée subsidiaire r(j) est générée en fonction de la donnée d'entrée X(i), comme cela sera expliqué plus loin.

Une deuxième fonction de codage Cx est alors appliquée, lors de l'étape de codage 107', à la donnée d'entrée X(i) et à la deuxième donnée subsidiaire r(j) générée lors de l'étape 105' afin d'obtenir une donnée d'entrée codée x(i,j) vérifiant x(i,j)=Cx(X(i),r(j)).

Ainsi, pour chaque paire de variables (i,j), une donnée d'entrée codée x(i,j) et une donnée de sortie y(i,j) sont obtenues à l'issue de l'étape de codage 107'. Pour une même donnée d'entrée X(i), n paires de données (x(i,j),y(i,j)), avec j allant de 1 à n, sont ainsi calculées.

Une fois les deux boucles récursives terminées, on dispose alors d'un ensemble de paires {(x(i,j),y(i,j))}$_{1\leq i\leq m,\ 1\leq i\leq n}$ qu'il est possible de mémoriser, lors de l'étape de mémorisation 113', sous forme d'une table de correspondance T' dans un moyen de mémorisation adapté.

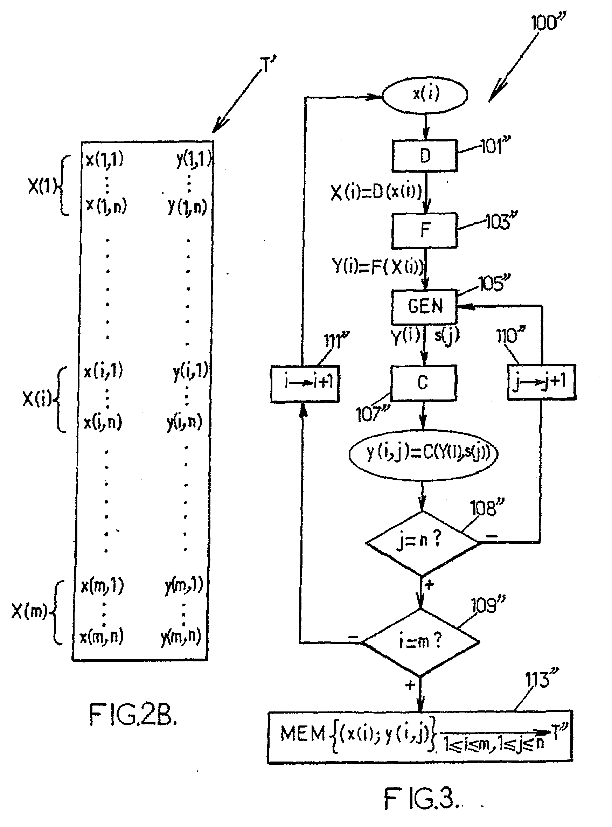

La figure 2B illustre la table de correspondance générée par un tel premier mode de réalisation du procédé de génération de la présente invention.

Sur cette figure 2B, la table de correspondance T' se présente toujours sous la forme de 2 colonnes et n*m lignes, la première colonne comportant cette fois les données d'entrée codées x(i,j) alors que la deuxième colonne comporte toujours les données de sortie y(i,j) associées respectivement aux données d'entrée codées x(i,j).

Ces données peuvent être classées par exemple par incrémentation de la première variable i suivie de l'incrémentation de la deuxième variable j, ce qui permet de grouper les paires de données (x(ij),y(ij)) en fonction de la donnée d'entrée X(i) utilisée pour les générer, comme cela est indiqué sur la figure 2B.

De manière préférentielle, les données sont classées sans ordre apparent par rapport à i et j, de manière à ce qu'un observateur de la table ne puisse pas grouper les paires de données (x(i,j),y(i,j)) en fonction de la donnée d'entrée X(i) utilisée pour les générer. Dans un mode préféré de réalisation, les données sont classées par valeurs croissantes, ou triées selon un ordre arbitraire, ce qui facilite par la suite leur recherche dans la table.

La table de correspondance T' ainsi générée consiste donc en un ensemble de n*m paires de données codées (x(i,j),y(i,j)) et peut ainsi se présenter sous la forme d'un tableau à 2 colonnes et n*m lignes, chaque ligne de ce tableau contenant une paire de données x(i,j) et y(i,j). Cette table de correspondance peut être stockée dans un moyen de mémorisation de type mémoire morte figée.

On voit bien, sur cette figure 2B, que pour chaque donnée d'entrée X(i), il existe un certain nombre de données de sortie y(i,j) associées à un certain nombre de données d'entrée codées x(i,j). Ce mode de réalisation est avantageux dans le sens où la table T' générée ne contient plus directement aucune données d'entrée X(i), mais seulement des données codées x(i,j) correspondant à cette donnée d'entrée.

L'utilisateur effectuant du « reverse engineering » sur une table de correspondance T' n'a alors même plus accès aux données d'entrée X(i) sur laquelle est appliquée directement la fonction de chiffrement F. Cet autre mode de réalisation est plus résistant à une tentative de déduction frauduleuse dans la mesure où un utilisateur ayant accès aux données d'entrée codées x(i,j) et de sortie y(i,j) n'a pas la connaissance directe ni de la donnée d'entrée X(i), ni de la donnée chiffrée Y(i). Il lui est d'autant plus difficile d'en déduire la fonction cryptographique F utilisée.

On se réfère maintenant à la **figure 3**, laquelle illustre un deuxième mode de réalisation du procédé de génération de la présente invention.

Les étapes du procédé 100" illustré sur cette figure correspondent aux étapes du procédé 100 illustré sur la figure 1A, à ceci près que la donnée x(i) sur laquelle s'applique le procédé est une donnée précodée, obtenue à partir de la donnée d'entrée X(i) au moyen d'une fonction de codage préalable.

Dans un tel cas, il est avantageux d'appliquer préalablement une autre fonction préliminaire D à la donnée précodée x(i), lors d'une étape préliminaire 101". Cette autre fonction préliminaire D est de préférence une fonction permettant le décodage de la fonction de codage préalable employée pour obtenir cette donnée x(i) à partir de la donnée d'entrée X(i) ; afin que le chiffrement de l'étape 103" puisse bien porter sur la donnée d'entrée X(i) elle-même et non sur sa forme précodée.

Cet autre mode de réalisation est résistant à une tentative de déduction frauduleuse dans la mesure où un utilisateur ayant accès aux données d'entrée précodée x(i) et de sortie y(i,j) n'a pas la connaissance directe ni de la donnée d'entrée X(i), ni de la donnée chiffrée Y(i). Il lui est d'autant plus difficile d'en déduire la fonction cryptographique F utilisée.

Cet autre mode de réalisation est particulièrement avantageux lorsque la donnée d'entrée précodée x(i) est elle-même obtenue par application préalable d'une autre fonction préalable de codage $C_0$ à une donnée d'entrée initiale. Dans un tel cas de figure, en choisissant de préférence comme fonction préliminaire utilisée à l'étape 101 la fonction de décodage $D_0$ correspondant à cette fonction préalable de codage $C_0$, il est possible d'enchaîner une succession d'opérations cryptographiques tout en ne laissant observables que des données codées.

Ceci permet d'implémenter une fonction de chiffrement globale en boîte blanche cryptographique, laquelle est composée d'une succession de N opérations cryptographiques partielles, chacune représentée par une table de correspondance $T_k$ générée selon la présente invention et utilisant des variables de transitions codées qui empêchent l'utilisateur de déduire individuellement chaque opération cryptographique, et donc a fortiori la fonction de chiffrement globale.

Une telle fonction de chiffrement globale peut donc utiliser une succession de n tables de correspondances $T_1,...,T_k,...,T_N$ générées selon la présente invention, de sorte que la donnée de sortie associée à une donnée d'entrée initiale dans la première table $T_1$ constitue une donnée d'entrée pour la deuxième table $T_2$, laquelle fournit une donnée de sortie associée pour la troisième table $T_3$, et ainsi de suite jusqu'à obtenir, avec la N-ième table $T_N$, une donnée de sortie qui correspond finalement à l'application de la fonction de chiffrement globale à la donnée d'entrée initiale.

Ces tables de correspondances $\{T_k\}_{1 \leq k \leq N}$ peuvent alors être utilisées lors du déchiffrement, dans une boîte blanche cryptographique comportant ces N tables.

Ainsi, pour déchiffrer une donnée chiffrée au moyen de la fonction de chiffrement globale précitée, il convient de retrouver, dans la dernière table de correspondance $T_N$, la donnée d'entrée associée à la donnée de sortie équivalente à la donnée à déchiffrer. Cette donnée d'entrée dans la dernière table $T_N$ constitue une donnée de sortie pour l'avant-dernière table $T_{N-1}$, laquelle fournit une donnée d'entrée correspondante pour la table $T_{N-1}$, et ainsi de suite jusqu'à obtenir, avec la première table $T_1$, une donnée d'entrée qui correspond finalement au déchiffrement de la donnée chiffrée.

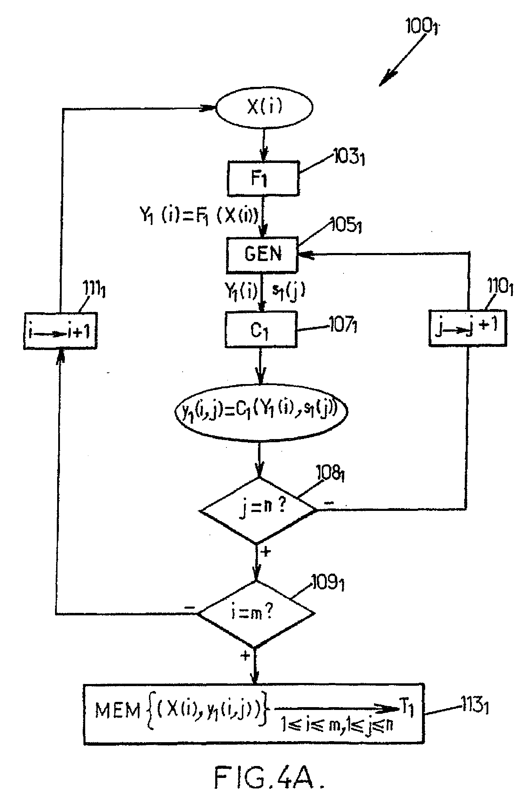

On se réfère maintenant aux **figures 4A-4C** qui illustrent un procédé de génération d'une pluralité de n tables successives de correspondance $\{T_k\}_{1 \leq k \leq N}$.

La figure 4A illustre l'étape initiale $100_1$ de génération de la première table $T_1$.

Pour chaque donnée d'entrée initiale X(i) considérée, une fonction cryptographique $F_1$ est appliquée à cette donnée d'entrée initiale $X_1(i)$, lors d'une première étape de chiffrement partiel $103_1$, afin d'obtenir une donnée intermédiaire chiffrée initiale $Y_1(i)$.

Une donnée subsidiaire initiale $s_1(j)$ est également générée lors d'une étape de génération $105_1$, par exemple de manière pseudo-aléatoire.

Une étape $107_1$ de codage est alors effectuée sur la donnée intermédiaire chiffrée $Y_1(i)$ ainsi que sur la donnée subsidiaire initiale $s_1(j)$, au moyen d'une fonction de codage $C_1$, afin d'obtenir une donnée de sortie $y_1(i,j)$. Cette opération est répétée n fois, pour des données subsidiaire initiales $s_1(j)$ avec j allant de 1 à n, pour chaque donnée d'entrée initiale X(i).

Un ensemble de n*m paires de données d'entrée initiales et de données de sortie associées $\{(X(i), y_1(i,j))\}_{1 \leq i \leq m, 1 \leq i \leq n}$, est ainsi calculé et forme la première table de correspondance $T_1$, par exemple sous forme d'une matrice 2*(m*n) mémorisée dans un moyen de mémorisation approprié.

Suite à cette étape initiale $100_1$, le procédé de génération comprend une succession d'étapes $100_k$ de génération d'une table de correspondance $T_k$, avec k allant de 2 à N.

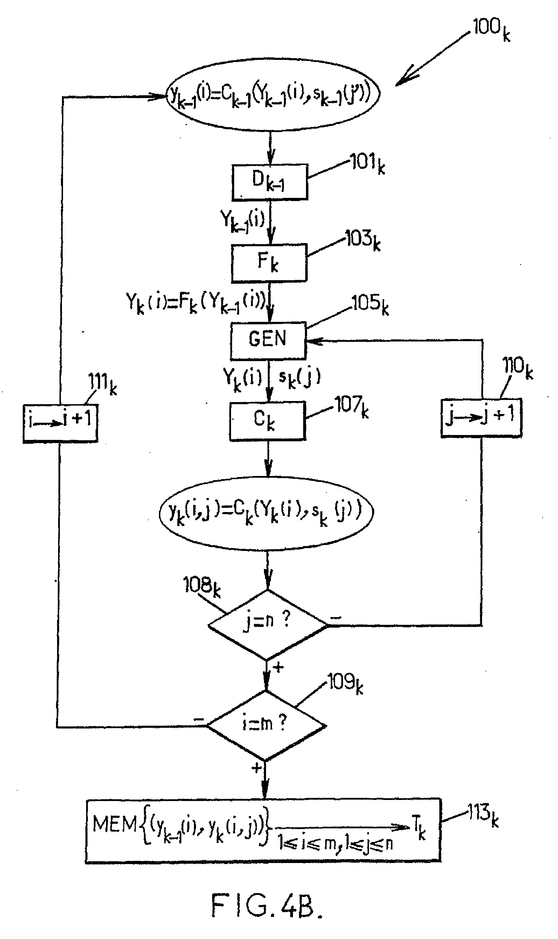

La figure 4B illustre l'étape $100_k$ suivant une étape de génération précédente $100_{k-1}$. Les données d'entrée utilisées dans cette étape $100_k$ sont certaines, voire toutes les données de sortie $\{y_{k-1}(i)\}_{1 \leq i \leq m}$ obtenues lors de l'étape précédente $100_{k-1}$. Pour chaque donnée d'entrée $y_{k-1}(i)$, laquelle correspond à une variable de transition entre la table $T_{k-1}$ et la table $T_k$, les étapes suivantes sont effectuées :

- La donnée intermédiaire chiffrée initiale $Y_{k-1}(i)$, obtenue à l'issue de l'étape de chiffrement $103_{k-1}$ de l'étape de génération précédente $100_{k-1}$ est d'abord retrouvée par application, lors de l'étape de décodage $101_k$, de la fonction de décodage $D_{k-1}$ correspondant à la fonction de codage $C_{k-1}$ utilisée lors de l'étape de codage $105_{k-1}$ de l'étape de génération

précédente $100_{k-1}$.

- Une fonction cryptographique $F_k$ est alors appliquée, lors de l'étape de chiffrement partiel $103_k$, à cette donnée intermédiaire chiffrée initiale $Y_{k-1}(i)$ afin d'obtenir une nouvelle donnée intermédiaire chiffrée $Y_k(i)$.

Cette nouvelle donnée intermédiaire chiffrée $Y_k(i)$ correspond au chiffrement de la donnée d'entrée initiale $X(i)$ par la composition des fonctions cryptographiques $F_0...F_k$. Cette composition est effectuée sans donner un quelconque accès à un utilisateur, puisque celui-ci ne peut observer que les variables transitoires $y_k(i)$, elles-mêmes codées en fonction notamment d'une donnée subsidiaire qui peut être pseudo-aléatoire. La composition des fonctions cryptographiques $F_0...F_k$ est ainsi protégée.

Une nouvelle donnée subsidiaire $s_k(j)$ est également générée lors d'une étape de génération $105_k$, par exemple de manière pseudo-aléatoire. Cependant, dans cette étape de génération $105_k$, cette nouvelle donnée subsidiaire $s_k(j)$ peut également dépendre de la donnée d'entrée $y_{k-1}(i)$, en particulier de la donnée subsidiaire précédemment générée $s_{k-1}(j')$ lors de l'étape de génération précédente $100_{k-1}$, qui est retrouvée grâce à l'étape de décodage $101_k$.

Dans un mode de réalisation avantageux, la nouvelle donnée subsidiaire $s_k(j)$ est calculée à partir de cette ancienne donnée subsidiaire $s_{k-1}(j')$, par exemple par application d'une fonction pseudo-aléatoire ou d'une fonction garantissant que la nouvelle donnée subsidiaire est différente de l'ancienne donnée subsidiaire, afin de faciliter la génération de la nouvelle donnée subsidiaire $s_k(j)$.

Une fois la nouvelle donnée subsidiaire $s_k(j)$ générée, une nouvelle fonction de codage $C_k$ est utilisée, lors de l'étape $107_k$, pour coder la nouvelle donnée intermédiaire chiffrée $Y_k(i)$ et la nouvelle donnée subsidiaire $s_k(j)$, afin d'obtenir une nouvelle donnée de sortie $y_k(i,j)$.

Un ensemble de $n*m$ paires de données d'entrée initiales et de données de sortie associées $\{(y_{k-1}(i),y_k(i,j))\}_{1 \le i \le m,\ 1 \le j \le n}$ est ainsi calculé et forme la table de correspondance $T_k$, toujours par exemple sous forme d'une matrice $2*(m*n)$ mémorisée dans un moyen de mémorisation approprié.

L'étape de génération $100_k$ est alors répétée N-2 fois jusqu'à une étape $100_{N-1}$, de façon similaire à l'étape $100_k$, pour obtenir les tables de correspondance $T_2$ à $T_{N-1}$. Chaque table $T_k$ parmi celles-ci est constituée d'un ensemble de m paires de données d'entrée et de données de sortie associées $\{(y_{k-1}(i),y_k(i,j))\}_{1 \le i \le m,\ 1 \le i \le m}$ calculé de la manière ci-avant.

A l'issue du calcul de la table $T_{N-1}$, les données de sortie $y_{N-1}(i)$ sont sous formes codées, au moyen de la dernière fonction de codage $C_{N-1}$ employée. Il est alors possible, dans un mode de réalisation, de générer une dernière table de correspondance $T_N$ correspondant au décodage de chaque donnée $y_{N-1}(i)$ en une donnée $y_N(i)$, au moyen de la fonction de décodage $D_{N-1}$ correspondant à la fonction de codage $C_{N-1}$.

Ce faisant, les données décodées obtenues équivalent alors aux dernières données intermédiaires chiffrées $Y_{N-1}(i)$ issues directement de la fonction cryptographique $F_{N-1}$, ce qui laisse la possibilité à l'utilisateur d'accéder à cette dernière fonction cryptographique.

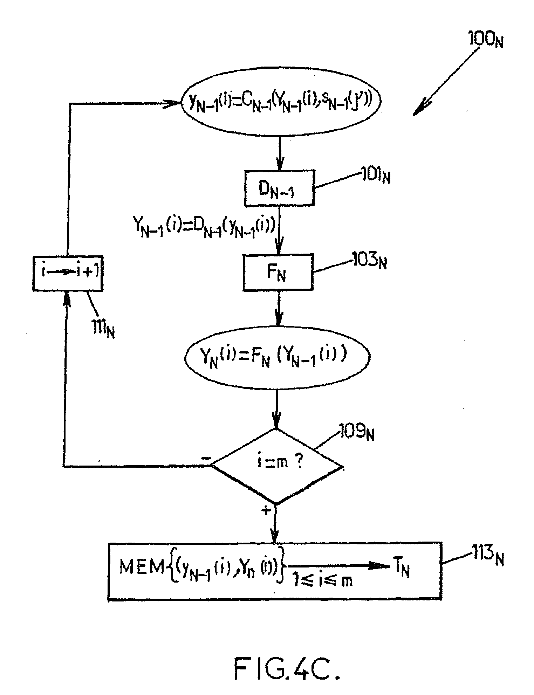

Une autre variante consiste à générer la dernière table de correspondance $T_N$ de la façon illustrée sur la figure 4C, lors d'une étape finale $100_N$ de génération de table.

Cette étape finale $100_N$ comprend, pour chaque donnée d'entrée $y_{N-1}(i)$, une première étape $101_N$ de décodage de cette donnée afin d'obtenir une nouvelle donnée intermédiaire chiffrée $Y_{N-1}(i)$.

Une dernière étape $103_N$ de chiffrement partiel est ensuite effectuée, au moyen de la fonction cryptographique $F_N$, pour obtenir une donnée de sortie finale $Y_N(i)$. Un ensemble de m paires de données d'entrée et de sortie finale associée $\{(y_{N-1}(i), Y_N(i))\}_{1 \le i \le m}$ est ainsi calculé et forme la dernière table de correspondance $T_N$ toujours par exemple sous la forme d'une matrice $m*2$ mémorisée dans un moyen de mémorisation approprié.

Une telle donnée de sortie finale $Y_N(i)$ correspond alors au chiffrement global de la donnée d'entrée initiale $X(i)$ au moyen de la composition des fonctions cryptographiques $F_1,...,F_N$.

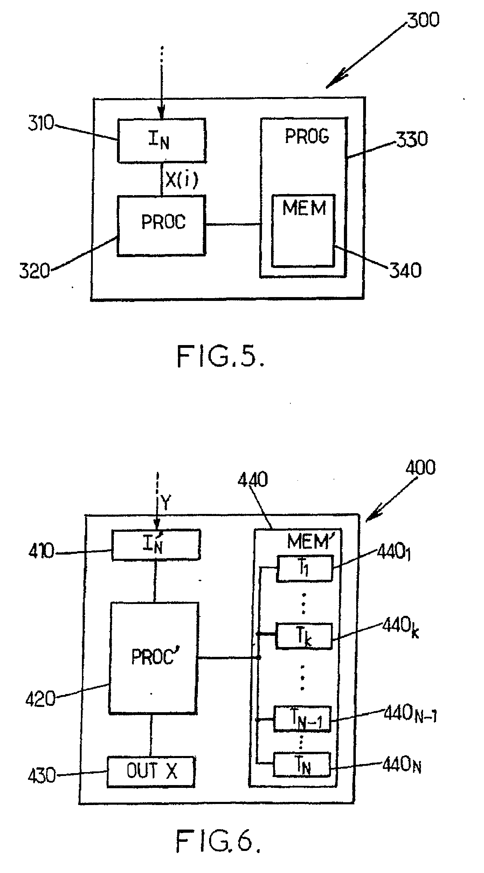

On se réfère maintenant à la figure 5, laquelle illustre un dispositif 300 d'implémentation physique d'une table de correspondance cryptographique telle que décrite précédemment.

Un tel dispositif 300 comprend des moyens d'entrée 310, tels que des moyens de connexion pour le transfert de données, connectés à une unité de traitement de données 320. Cette unité de traitement de données peut être un processeur, un micro-processeur, ou tout type de composant capable d'effectuer des calculs sur des données.

Le dispositif 300 comprend également une unité de programmation 330 apte à recevoir au moins un moyen de mémorisation 340 et connectée à l'unité de traitement de données.

En particulier, le moyen de mémorisation 340 à recevoir peut consister en une mémoire morte, de type ROM (Read Only Memory), dans laquelle il n'est possible d'écrire des données qu'une seule fois et qui donc fonctionne en lecture seule. Dans un tel cas, l'unité de programmation 330 est une unité capable de programmer une telle mémoire morte.

L'unité de traitement 320 est d'une part arrangée pour recevoir un ensemble de m données d'entrée $X(i)$ et pour générer, à partir de chacune de ces données d'entrée $X(i)$, des données de sortie $y(i,j)$ au moyen de calcul impliquant par exemple une unique fonction cryptographique F.

L'ensemble des $n*m$ paires de données d'entrée et de sortie ainsi obtenues, $\{(X(i),y(i,j))\}_{1 \le i \le m,\ 1 \le i \le m}$

forme une table de correspondance T correspondant à la fonction cryptographique F. L'unité de programmation 330 est alors arrangée pour mémoriser cette table de correspondance dans le moyen de mémorisation 340.

Dans le cas où la fonction cryptographique F est composée de N fonctions cryptographiques partielles $F_k$, l'unité de programmation 330 peut mémoriser les N tables de correspondances $T_1,...,T_N$ correspondant à chaque fonction $F_k$ les unes après les autres dans N moyens de mémorisation $340_1,...,340_N$, chaque moyen de mémorisation $340_k$ étant placé à tour de rôle dans l'unité de programmation 330 pour y être programmé au moyen de la table de correspondance $T_k$ qui lui correspond. Une telle méthode de programmation fournit alors N moyens de mémorisation $340_1,...,340_N$ séparés, comprenant chacun une table de correspondance $T_k$ associée à l'une des fonctions cryptographiques partielles $F_k$.

Une variante consiste à programmer simultanément les N tables de correspondances $T_1,...,T_N$. Ceci peut être fait avec une unité de programmation 330 arrangée pour recevoir une unité de mémorisation 340 comprenant N moyens de mémorisation $340_1,...,340_N$. L'unité de programmation 330 peut alors programmer chacun des moyens de mémorisation $340_k$ de l'unité de mémorisation avec la table de correspondance $T_k$ lui correspondant, et cette programmation peut être faite en parallèle. Une telle méthode fournit donc une unité de mémorisation 340 dans laquelle sont mémorisées toutes les tables de correspondance $T_1,...,T_N$. L'unité de mémorisation 340 est donc associée à la fonction cryptographique globale F. Cette méthode présente l'avantage de fournir une unité de mémorisation potentiellement plus compacte et de permettre une implémentation physique plus rapide, par l'utilisation de calculs en parallèle.

On se réfère maintenant à la figure 6, laquelle illustre un dispositif de déchiffrement cryptographique 400 utilisant au moins une table de correspondance générée au moyen du procédé selon la présente invention.

Un tel dispositif de déchiffrement 400 peut être utilisé dans tout système recevant des données multimédias chiffrées, tels que des Set Top Box recevant des programmes chiffrés tels que des films, des lecteurs de supports physiques audio tels que des CD ou des disques optiques, des lecteurs de support physiques vidéo tels que des DVDs, voire des modules de sécurité de type dongle ou carte à puce par exemple, aptes à déchiffrer un message reçu chiffré.

Le dispositif de déchiffrement 400 comprend d'une part des moyens de réception de données 410 capables de recevoir une donnée chiffrée Y, comme par exemple des moyens de connexion pour le transfert de données, filaire ou sans fil.

Pour pouvoir déchiffrer une telle donnée chiffrée Y, le dispositif de déchiffrement comprend une unité de mémorisation 440 comprenant n moyens de mémorisation $440_1,...,440_N$ dans lesquels ont été mémorisés respectivement N tables de correspondance $T_1...,T_N$ générées par le procédé de génération illustré précédemment dans lequel les fonctions $F_k$ ont été employées.

Une telle unité de mémorisation 440 a pu être fabriquée au moyen du dispositif 300 d'implémentation physique décrit ci-avant et stockée au préalable dans le dispositif 400 avant d'être commercialisé. Une telle unité de mémorisation 440 peut aussi être programmée à distance, par téléchargement des différentes tables de correspondance $T_1,...,T_N$ dans une unité de mémorisation comprenant, ou pouvant être divisée, en N moyens de mémorisation $440_1,...,440_N$.

Le dispositif 400 comprend également une unité de traitement 420 capable de recevoir la donnée à déchiffrer Y et d'utiliser successivement les différents moyens de mémorisation $440_1,...,440_N$ pour déchiffrer Y. Pour ce faire, l'unité de traitement 420 va effectuer le processus inverse de celui effectué pour déduire la donnée Y de la donnée initiale X, lors du chiffrement. Plus précisément :

- l'unité de traitement 420 accède, lors d'une première étape initiale partielle de déchiffrement, au dernier moyen de mémorisation $440_N$ généré afin de retrouver, dans la table de correspondance $T_N$ correspondant à la dernière fonction $F_N$ composant la fonction F, la donnée d'entrée $Y_{N-1}$ correspondant à la donnée à déchiffrer Y prise comme donnée de sortie dans cette table $T_N$; puis

- l'unité de traitement 420 accède ensuite successivement, dans l'ordre décroissant, à chacun des moyens de mémorisation $440_k$ générés afin de retrouver, dans la table de correspondance $T_k$ correspondant à la fonction $F_k$ composant partiellement F, la donnée d'entrée $Y_{k-1}$ correspondant à la donnée $Y_k$ prise comme donnée.de sortie dans cette table $T_k$, cette donnée $Y_k$ ayant elle-même été obtenue de la sorte, et ainsi de suite jusqu'au deuxième moyen de mémorisation $440_2$ dans lequel est mémorisée la deuxième table de correspondance $T_2$ correspondant à la deuxième fonction partielle $F_2$;

- l'unité de traitement 420 accède alors, pour terminer, au premier moyen de mémorisation $440_1$ dans lequel est mémorisée la première table de correspondance $T_1$. En utilisant la dernière donnée d'entrée obtenue $Y_1$ à partir de la table précédente $T_2$ en tant que donnée de sortie de la table $T_1$, la donnée d'entrée associée va se trouver être la donnée initiale X.

Ces étapes successives reviennent à retrouver la donnée initiale X par application de la formule

$$X = F^{-1}(Y) = F_n^{-1} \circ ... \circ F_1^{-1}(Y).$$

Une fois la donnée initiale X retrouvée, elle peut être lue, écoutée, visionnée ou transmise par le biais des moyens de sortie 430.

Le dispositif de déchiffrement 400 constitue une boîte blanche au sens cryptographique du terme, c'est-à-dire que son utilisateur peut certes éventuellement avoir accès aux variables transitoires utilisées entre cha-

que moyens de mémorisation $440_k$ (par exemple, en surveillant les données transitant sur le bus liant le processeur 420 et l'unité de mémorisation 440), mais ne peut aucunement en déduire des informations sur les fonctions cryptographiques partielles $F_k$ utilisées pour chiffrer la donnée Y.

Ces fonctions $F_k$, pourtant virtuellement présentes dans le dispositif 400 par le biais des tables de correspondances $T_k$, sont inaccessibles à l'utilisateur et donc protégées de celui-ci.

Les étapes du procédé de génération de tables de correspondance décrit ci-avant peuvent être implémentées au moyen d'un programme d'ordinateur, utilisé par exemple dans l'unité de traitement 320 décrite ci-avant. En conséquence, l'invention vise aussi un programme, susceptible d'être exécuté par un ordinateur ou par un processeur de données, ce programme comportant des instructions pour commander l'exécution des étapes d'un procédé de génération tel que mentionné ci-dessus.

Ce programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, un appel de tables successives de correspondance $T_k$ a été décrit dans les figures 4A-4C précédentes. Cependant, l'invention ne se limite pas à une telle utilisation « linéaire » de ces tables mais s'applique aussi à une utilisation en réseau maillé où l'appel se fait séquentiellement et parallèlement.

De plus, la donnée d'entrée X(i) d'une table T peut être constituée d'une ou plusieurs données de sortie de tables précédentes, par exemple par concaténation de ces données de sortie, les codages concernés se correspondant alors entre eux.

Ainsi, dans l'exemple de la combinaison de sorties de deux tables $T_1$ et $T_2$ pour la mise en entrée d'une table $T_3$, on obtient en sortie de $T_1$ et $T_2$ respectivement les données de sortie $y_1$ et $y_2$ telle que $y_1=C_1(Y_1,s_1)$ et $y_2=C_2(Y_2,s_2)$, à partir des données d'entrée respectives $Y_1,y_2$ et des données subsidiaires respectives $s_1,s_2$.

La table $T_3$ prend alors en entrée la donnée $Y_3$ telle que $Y_3=Y_1||Y_2$, où $||$ est le symbole de la concaténation, ce qui est possible avec une donnée subsidiaire $s_3= s_1||s_2$ et une fonction de codage $C_3$ telle que $C_3(Y_3,s_3)= C_1(Y_1,s_1) || C_2(Y_2,s_2)$.

## Revendications

1.  Procédé de génération d'une table de correspondance utilisable dans un procédé de traitement cryptographique comprenant la mémorisation (113) d'une pluralité de données d'entrée (X(i)) et de données de sortie (y(i,j)), où chacune desdites données d'entrée est associée à une pluralité desdites données de sortie dans la table, et, pour chacune desdites données d'entrée (X(i)), une pluralité de premières données subsidiaires distinctes (s(j)) sont générées (105) et la pluralité de données de sortie (y(i,j)) sont obtenues par application (107), pour chacune desdites premières données subsidiaires générées, d'une fonction de codage à ladite première donnée subsidiaire (s(j)) et à une donnée intermédiaire chiffrée (Y(i)) dépendant de la donnée d'entrée (X(i)).

2.  Procédé de génération d'une table de correspondance selon la revendication 1, où la donnée intermédiaire chiffrée (Y(i)) est obtenue par application (103) d'une fonction cryptographique (F) à la donnée d'entrée (X(i)).

3.  Procédé de génération d'une table de correspondance selon la revendication 2, où pour chaque donnée d'entrée (X(i)), une pluralité de deuxièmes données subsidiaires distinctes (r(j)) sont générées (105') et une pluralité de données d'entrée codées (x(i,j)) sont obtenues par application (107'), pour chacune desdites deuxièmes données subsidiaires générées, d'une fonction de codage à ladite deuxième donnée subsidiaire (r(j)) et à la donnée d'entrée (X(i)).

4.  Procédé de génération d'une table de correspondance selon la revendication 3, où les premières données subsidiaires (s(j)) et/ou les deuxièmes données subsidiaires (r(j)) sont générées (105) aléatoirement.

**5.** Procédé de génération d'une table de correspondance selon l'une des revendications 1 à 4, où la donnée d'entrée (X(i)) est obtenue par application (101) d'une fonction préliminaire (D) à une donnée d'entrée précodée (x(i)).

**6.** Procédé de génération d'une table de correspondance selon la revendication 5, dans lequel la donnée d'entrée précodée $(y_{k-1}(i))$ est obtenue par application préalable $(105_{k-1})$ d'une fonction préalable de codage $(C_{k-1})$ à au moins une donnée intermédiaire chiffrée préalable $(Y_{k-1})$, où la fonction préliminaire appliquée $(101_k)$ à la donnée d'entrée préalable $(y_{k-1}(i))$ est une fonction de décodage $(D_k)$ correspondant à ladite fonction préalable de codage $(C_{k-1})$.

**7.** Procédé de génération d'une pluralité de tables de correspondance, comprenant la génération initiale $(100_1)$ d'une première table de correspondance $(T_1)$ au moyen du procédé selon l'une des revendications 1 à 6, suivie de la génération $(100_k)$ d'une succession de tables de correspondances $(T_k)$ au moyen du procédé de génération selon la revendication 6.

**8.** Procédé de génération d'une pluralité de tables de correspondance selon la revendication 7, comprenant la génération finale $(100_N)$ d'une dernière table de correspondance $(T_N)$ dans laquelle sont mémorisées une pluralité de données d'entrée $(y_{N-1}(i))$ associées chacune à une pluralité de données de sortie $(Y_n(i))$, chacune desdites données de sortie étant obtenue par application $(103_N)$ d'une fonction cryptographique $(F_N)$ à une donnée intermédiaire $(Y_{N-1}(i))$ obtenue par application $(101_N)$ à la donnée d'entrée associée $(y_{N-1}(i))$ d'une fonction de décodage $(D_N)$ correspondant à la fonction de codage employée lors de la génération de la dernière table $(T_{N-1})$ générée au cours du procédé selon la revendication précédente.

**9.** Procédé de chiffrement d'une donnée d'entrée (X(i)) en une donnée de sortie (y(i,j)), ladite donnée de sortie (y(ij)) étant obtenue par application d'une fonction de codage (217) à une première donnée subsidiaire (s(j)) et une donnée intermédiaire chiffrée (Y(i)) obtenue par application (213) d'une fonction cryptographique (F) à la donnée d'entrée (X(i)), ladite donnée d'entrée étant associée à une pluralité de données de sortie selon une table de correspondance générée au moyen d'un procédé selon l'une des revendications 1 à 8.

**10.** Procédé de chiffrement d'une donnée d'entrée (X(i)) en une donnée de sortie (y(i,j)) selon la revendication 9, comprenant une étape préalable de mémorisation (205) d'une pluralité de données subsidiaires utilisées pour générer (200) au moins une table de correspondance (T), la première donnée subsidiaire (s(j)) étant sélectionnée (215) aléatoirement parmi ladite pluralité de données subsidiaires.

**11.** Unité de mémorisation (340,440) comprenant au moins un moyen de mémorisation $(440_k)$ dans lequel sont mémorisées une première pluralité de données d'entrée (X(i)) et une deuxième pluralité de données de sortie (y(i,j)), où pour chaque moyen de mémorisation, chacune des données d'entrée (X(i)) est associée à une pluralité desdites données de sortie (y(i,j)) selon une table de correspondance $(T_k)$ générée au moyen d'un procédé de génération selon l'une des revendications 1 à 8.

**12.** Dispositif d'implémentation physique d'une table de correspondance cryptographique comprenant une unité de traitement (320) de données connectée à une unité de programmation (330) apte à recevoir au moins un moyen de mémorisation (340), où l'unité de traitement est arrangée pour générer, à partir d'une pluralité de données d'entrée (X(i)), au moins une table de correspondance cryptographique au moyen du procédé selon l'une des revendications 1 à 8, l'unité de programmation étant arrangée pour mémoriser ladite table de correspondance dans le moyen de mémorisation.

**13.** Dispositif de déchiffrement (400) d'une donnée chiffrée comprenant une unité de mémorisation (440) selon la revendication 11, et un module de traitement (420) connecté à chacun des moyens de mémorisation de l'unité de mémorisation, ledit module de traitement (440) étant agencé pour lire une première donnée d'entrée associée à la donnée à déchiffrer dans le moyen de mémorisation $(340_1)$ dans lequel est mémorisée la dernière table générée $(T_N)$ et pour lire, successivement dans l'ordre inverse de génération des tables successivement mémorisées dans les moyens de mémorisation $(340_k)$, une donnée d'entrée $(y_{k-1}(i))$ associée à la donnée de sortie correspondant à la donnée d'entrée lue $(y_k(i))$ dans le moyen de mémorisation lu précédemment.

**14.** Produit de programme d'ordinateur enregistré sur un support de mémorisation pour exécution par une unité de traitement, où lors de l'exécution par l'ordinateur, celui-ci permet la mise en oeuvre du procédé de génération selon l'une des revendications 1 à 8 afin d'obtenir au moins une table de correspondance cryptographique.

**Patentansprüche**

**1.** Verfahren zum Erzeugen einer Zuordnungstabelle, die in einem Verfahren zur kryptografischen Verarbeitung verwendet werden kann, die Speicherung (113) einer Vielzahl von Eingabedaten (X(i)) und von Ausgabedaten (y(i, j)) umfassend, wobei jedes der besagten Eingabedaten einer Vielzahl der besagten Ausgabedaten in der Tabelle zugeordnet ist, und wobei für jedes der besagten Eingabedaten (X(i)) eine Vielzahl von ersten unterschiedlichen subsidiären Daten (s(j)) erzeugt (105) werden, und man die Vielzahl von Ausgabedaten (y(i, j)) für jede der besagten ersten erzeugten subsidiären Daten durch die Anwendung (107) einer Kodierfunktion auf das besagte erste subsidiäre Datum (s(j)) und auf ein chiffriertes Zwischendatum (Y(i)) erhält, das vom Eingabedatum (X(i)) abhängig ist.

2. Verfahren zum Erzeugen einer Zuordnungstabelle nach Anspruch 1, wobei man das chiffrierte Zwischendatum (Y(i)) durch die Anwendung (103) einer kryptografischen Funktion (F) auf das Eingabedatum (X(i)) erhält.

3. Verfahren zum Erzeugen einer Zuordnungstabelle nach Anspruch 2, wobei für jedes Eingabedatum (X(i)) eine Vielzahl von zweiten unterschiedlichen subsidiären Daten (r(j)) erzeugt (105') werden, und man durch die Anwendung (107') einer Kodierfunktion für jede der besagten erzeugten subsidiären zweiten Daten auf das besagte zweite Datum (r(j)) und auf das Eingabedatum (X(i)) eine Vielzahl von kodierten Eingabedaten (x(i, j)) erhält.

4. Verfahren zum Erzeugen einer Zuordnungstabelle nach Anspruch 3, wobei die ersten subsidiären Daten (s(j)) und/ oder die zweiten subsidiären Daten (r(j)) zufällig erzeugt (105) werden.

5. Verfahren zum Erzeugen einer Zuordnungstabelle nach einem der Ansprüche 1 bis 4, wobei man das Eingabedatum (X(i)) durch das Anwenden (101) einer vorläufigen Funktion (D) auf ein vorkodiertes Eingabedatum (x(i)) erhält.

6. Verfahren zum Erzeugen einer Zuordnungstabelle nach Anspruch 5, wobei man das vorkodierte Eingabedatum ($y_{k-1}$(i)) durch das vorherige Anwenden ($105_{k-1}$) einer vorherigen Kodierfunktion ($C_{k-1}$) auf zumindest ein vorheriges chiffriertes Zwischendatum ($Y_{k-1}$(i)) erhält, wobei die vorläufige Funktion ($101_k$), die auf das vorherige Eingabedatum ($y_{k-1}$(i)) angewandt wird, eine Dekodierfunktion ($D_k$) ist, die der besagten vorherigen Kodierfunktion ($C_{k-1}$) entspricht.

7. Verfahren zum Erzeugen einer Vielzahl von Zuordnungstabellen, das ursprüngliche Erzeugen ($100_1$) einer ersten Zuordnungstabelle ($T_1$) anhand des Verfahrens nach einem der Ansprüche 1 bis 6 umfassend, gefolgt vom Erzeugen ($100_k$) einer Folge von Zuordnungstabellen ($T_k$) anhand des Verfahrens zum Erzeugen nach Anspruch 6.

8. Verfahren zum Erzeugen einer Vielzahl von Zuordnungstabellen nach Anspruch 7, das abschließende Erzeugen ($100_N$) einer letzten Zuordnungstabelle ($T_N$) umfassend, in der eine Vielzahl von Eingabedaten ($y_{N-1}$(i)) gespeichert sind, die jeweils einer Vielzahl von Ausgabedaten ($Y_N$(i)) zugeordnet sind, wobei man jedes der besagten Ausgabedaten durch das Anwenden ($103_N$) einer kryptografischen Funktion ($F_N$) auf ein Zwischendatum ($Y_{N-1}$(i)) erhält, das man durch das Anwenden ($101_N$) einer Dekodierfunktion ($D_N$) auf das zugeordnete Eingabedatum ($y_{N-1}$(i)) erhält, die der Kodierfunktion entspricht, die beim Erzeugen der letzten Tabelle ($T_{N-1}$) verwendet wird, die beim Verfahren nach dem vorherigen Anspruch erzeugt wird.

9. Verfahren zum Chiffrieren eines Eingabedatums (X(i)) in ein Ausgabedatum (y(i, j)), wobei man das besagte Ausgabedatum (y(i, j)) durch das Anwenden einer Kodierfunktion (217) auf ein erstes subsidiäres Datum (s(j)) und ein chiffriertes Zwischendatum (Y(i)) erhält, das man durch das Anwenden (213) einer kryptografischen Funktion (F) auf das Eingabedatum (X(i)) erhält, wobei das besagte Eingabedatum entsprechend einer Zuordnungstabelle einer Vielzahl von Ausgabedaten zugeordnet wird, die anhand eines Verfahrens nach einem der Ansprüche 1 bis 8 erzeugt wird.

10. Verfahren zum Chiffrieren eines Eingabedatums (X(i)) in ein Ausgabedatum (y(i, j)) nach Anspruch 9, einen vorherigen Schritt zum Speichern (205) einer Vielzahl von subsidiären Daten umfassend, die verwendet werden, um zumindest eine Zuordnungstabelle (T) zu erzeugen (200), wobei das erste subsidiäre Datum (s(j)) zufällig aus der besagten Vielzahl von subsidiären Daten ausgewählt (215) wird.

11. Speichereinheit (340, 440), zumindest ein Speichermittel ($440_k$) umfassend, in dem eine erste Vielzahl von Eingabedaten (X(i)) und eine zweite Vielzahl von Ausgabedaten (y(i, j)) gespeichert werden, wobei für jedes Speichermittel jedes der Eingabedaten (X(i)) entsprechend einer Zuordnungstabelle ($T_k$) einer Vielzahl der besagten Ausgabedaten (y(i, j)) zugeordnet wird, die anhand eines Verfahrens zum Erzeugen nach einem der Ansprüche 1 bis 8 erzeugt wird.

12. Vorrichtung zur physischen Implementierung einer kryptografischen Zuordnungstabelle, eine Datenverarbeitungseinheit (320) umfassend, die mit einer Programmiereinheit (330) verbunden ist, die in der Lage ist, zumindest ein Speichermittel (340) aufzunehmen, wobei die Bearbeitungseinheit ausgeführt ist, um anhand eines Verfahrens nach einem der Ansprüche 1 bis 8 aus einer Vielzahl von Eingabedaten $(X(i))$ zumindest eine kryptografische Zuordnungstabelle zu erzeugen, wobei die Programmiereinheit ausgeführt ist, um die besagte Zuordnungstabelle im Speichermittel abzuspeichern.

13. Vorrichtung zum Dechiffrieren (400) eines chiffrierten Datums, eine Speichereinheit (440) nach Anspruch 11 umfassend, und ein Bearbeitungsmodul (420), das mit jedem der Speichermittel der Speichereinheit verbunden ist, wobei das besagte Bearbeitungsmodul (440) ausgeführt ist, um ein erstes Eingabedatum zu lesen, das dem Datum zugeordnet ist, das im Speichermittel $(340_1)$ zu dechiffrieren ist, in dem die letzte erzeugte Tabelle $(T_N)$ gespeichert ist, und um nach und nach in umgekehrter Reihenfolge der Erzeugung der nach und nach in den Speichermitteln $(340_k)$ gespeicherten Tabellen ein Eingabedatum $(y_{k-1})(i))$ zu lesen, das dem Ausgabedatum zugeordnet ist, das dem Eingabedatum $(y_k(i))$ entspricht, das im zuvor gelesenen Speichermittel gelesen wird.

14. Computerprogrammprodukt, das in einem Speichermedium zur Ausführung durch die Bearbeitungseinheit gespeichert wird, wobei bei der Ausführung durch den Computer dieser die Umsetzung des Verfahrens zum Erzeugen nach einem der Ansprüche 1 bis 8 ermöglicht, um zumindest eine kryptografische Zuordnungstabelle zu erhalten.

**Claims**

1. Method for generating a lookup table that can be used in a cryptographic processing method comprising the storage (113) of a plurality of input data items $(X(i))$ and output data items $(y(i, j))$, wherein each of said input data items is associated with a plurality of said output data items in the table and, for each of said input data items $(X(i))$, a plurality of first distinct subsidiary data items $(s(j))$ are generated (105) and the plurality of output data items $(y(i, j))$ are obtained by applying (107), for each of said first subsidiary data items generated, an encoding function to said first subsidiary data item $(s(j))$ and to an enciphered intermediate data item $(Y(i))$ dependent on the input data item $(X(i))$.

2. Method for generating a lookup table according to claim 1, wherein the enciphered intermediate data item $(Y(i))$ is obtained by applying (103) a cryptographic function $(F)$ to the input data item $(X(i))$.

3. Method for generating a lookup table according to claim 2, wherein, for each input data item $(X(i))$, a plurality of second distinct subsidiary data items $(r(j))$ are generated (105') and a plurality of encoded input data items $(x(i, j))$ are obtained by applying (107'), for each of said second subsidiary data items generated, an encoding function to said second subsidiary data item $(r(j))$ and to the input data item $(X(i))$.

4. Method for generating a lookup table according to claim 3, wherein the first subsidiary data items $(s(j))$ and/or the second subsidiary data items $(r(j))$ are generated (105) randomly.

5. Method for generating a lookup table according to one of claims 1 to 4, wherein the input data item $(X(i))$ is obtained by applying (101) a preliminary function $(D)$ to a pre-encoded input data item $(x(i))$.

6. Method for generating a lookup table according to claim 5, wherein the pre-encoded input data item $(y_{k-1}(i))$ is obtained by the prior application $(105_{k-1})$ of a previous encoding function $(C_{k-1})$ to at least one previous enciphered intermediate data item $(Y_{k-1}(i))$, wherein the preliminary function applied $(101_k)$ to the previous input data item $(y_{k-1}(i))$ is a decoding function $(D_k)$ corresponding to said prior encoding function $(C_{k-1})$.

7. Method for generating a plurality of lookup tables, comprising the initial generation $(100_1)$ of a first lookup table $(T_1)$ by means of the method according to one of claims 1 to 6, followed by the generation $(100_k)$ of a succession of lookup tables $(T_k)$ by means of the generation method according to claim 6.

8. Method for generating a plurality of lookup tables according to claim 7, comprising the final generation $(100_N)$ of a last lookup table $(T_N)$ in which there are stored a plurality of input data items $(y_{N-1}(i))$ each associated with a plurality of output data items $(Y_{N-1}(i))$, each of said output data items being obtained by the application $(103_N)$ of a cryptographic function $(F_N)$ to an intermediate data item $(Y_{N-1}(i))$ obtained by applying $(101_N)$ to the associated input data item $(Y_{N-1}(i))$ a decoding function $(D_N)$ corresponding to the encoding function employed during the generation of the last table $(T_{N-1})$ generated during the method according to the preceding claim.

9. Method for enciphering an input data item $(X(i))$ into an output data item $(y(i, j))$, said output data item $(y(i, j))$ being obtained by applying an encoding function (217) to a first subsidiary data item $(s(j))$ and an enciphered intermediate data item $(Y(i))$ obtained by applying (213) a cryptographic function $(F)$ to the input data item $(X(i))$, said input data item being associated with a plurality of output data items in accordance with a lookup table generated by means of a method according to one of claims 1 to 8.

**10.** Method for enciphering an input data item (X(i)) as an output data item (y(i, j)) according to claim 9, comprising a prior step of storing (205) a plurality of subsidiary data items used for generating (200) at least one lookup table (T), the first subsidiary data item (s(j)) being selected (215) randomly from said plurality of subsidiary data items.

**11.** Storage unit (340, 440) comprising at least one storage means ($440_k$) in which there are stored a first plurality of input data items (X(i)) and a second plurality of output data items (y(i, j)), for each storage means, each of the input data items (X(i)) is associated with a plurality of said output data items (y(i, j)) in accordance with a lookup table ($T_k$) generated by means of a generation method according to one of claims 1 to 8.

**12.** Device for the physical implementation of a cryptographic lookup table comprising a data processing unit (320) connected to a programming unit (330) able to receive at least one storage means (340), wherein the processing unit is arranged to generate, from a plurality of input data (X(i)), at least one cryptographic lookup table by means of the method according to one of claims 1 to 8, the programming unit being arranged to store said lookup table in the storage means.

**13.** Device for deciphering (400) an enciphered data item, comprising a storage unit (440) according to claim 11, and a processing module (420) connected to each of the storage means of the storage unit, said processing module (440) being arranged to read a first input data item associated with the data item to be deciphered in the storage means ($340_1$) in which the last table generated ($T_N$) is stored and to read, successively in the reverse order of generation of the tables successively stored in the storage means ($340_k$), an input data item ($y_{k-1}(i)$) associated with the output data item corresponding to the input data item ($y_k(i)$) read in the previously read storage means.

**14.** Computer program product recorded on a storage medium for execution by a processing unit during the execution by the computer, this allows the use of the generation method according to one of claims 1 to 8 in order to obtain at least one cryptographic lookup table.

FIG.1A.

FIG.1B.

FIG.1C.

FIG.2A.

FIG.2B.

FIG.3.

FIG.4A.

$100_k$

$$y_{k-1}(i)=C_{k-1}(Y_{k-1}(i),s_{k-1}(j'))$$

$101_k$

$D_{k-1}$

$Y_{k-1}(i)$

$103_k$

$F_k$

$Y_k(i)=F_k(Y_{k-1}(i))$

$105_k$

GEN

$Y_k(i)$  $s_k(j)$

$111_k$

$i \longrightarrow i+1$

$110_k$

$j \longrightarrow j+1$

$107_k$

$C_k$

$$y_k(i,j)=C_k(Y_k(i),s_k(j))$$

$108_k$

$j=n$ ?

$-$

$+$

$109_k$

$i=m$ ?

$-$

$+$

$113_k$

$$\text{MEM}\left\{(y_{k-1}(i),y_k(i,j))\right\}_{1 \leq i \leq m, 1 \leq j \leq n} \longrightarrow T_k$$

FIG.4B.

FIG.4C.

FIG.5.

FIG.6.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005259814 A1
- EP 1615098 A2
- EP 1833190 A1
- US 200714478 A1